# EUROPEAN PATENT SPECIFICATION

(11) **EP 2 091 337 B1**
(45) Date of publication and mention of the grant of the patent: **01.06.2011**
(21) Application number: 07851887.5
(22) Date of filing: 06.12.2007
(51) Int. Cl.: A22B 5/00, A22C 21/06

(54) **METHOD AND DEVICE FOR SEPARATING THE ANUS AND AT LEAST A PART OF THE RECTUM FROM A CARCASS**
VERFAHREN UND GERÄT ZUM ABTRENNEN DES ANUS UND MINDESTENS EINES TEILS DES REKTUMS VON EINEM SCHLACHTKÖRPER
PROCÉDÉ ET DISPOSITIF PERMETTANT DE SÉPARER D'UNE CARCASSE L'ANUS ET AU MOINS UNE PARTIE DU RECTUM

(30) Priority: 07.12.2006 NL 2000358
(43) Date of publication of application: 26.08.2009
(73) Proprietor: Humboldt B.V., 7131 PG Lichtenvoorde (NL)
(72) Inventor: TE DORSTHORST, Wilhelmus Antonius Bernardus, 7131 DH Lichtenvoorde (NL); UEFFING, Arno Hermanus Maria, 7141 NJ Groenlo (NL)
(74) Representative: Van den Heuvel, Henricus Theodorus
(86) International application number: PCT/NL2007/050627
(87) International publication number: WO 2008/069662

(56) References cited:
- EP-A- 1 027 829
- WO-A-92/13458
- NL-A- 7 510 362
- NL-A- 9 002 249
- US-A- 3 705 440
- US-B1- 6 210 263

## Description

The present invention relates to a method and device for separating the anus and the rectum from a carcass.

The processing of carcasses of slaughtered animals, such in particular pigs, sheep and cattle, generally comprises of opening, also referred to as cleaving, the pubic bone of the carcass and simultaneously arranging a first opening in the abdomen, separating the anus and the rectum from the carcass, fully opening the belly and breast and then removing the entrails through the opened belly. When the anus and at least a part of the rectum are released from the carcass, it is known in the prior art to make use of a vent cutter comprising a rotatable cylindrical knife provided with a core which is centered relative to the rotatable cylindrical life. Such a vent cutter is described in, among others, the European patent 1 027 829 and NL-A-9002249.

In the described art the core is first of all aligned with the anus and subsequently introduced at least partially into the rectum. Alignment can take place here with optical recognition means ("vision"). After insertion of the core and placing of a cylindrical knife into contact with the skin around the anus, the correct positioning of the cutting means can be tested with an underpressure device connecting to the interior of the cylindrical knife. If the cutting means are positioned correctly, an underpressure occurs in the cylindrical knife and this can be determined by measurement. In the case of incorrect alignment no underpressure occurs in the cylindrical knife.

As soon as correct positioning has been determined, the anus and at least a part of the rectum is detached (separated) from the carcass by rotating and introducing the cylindrical knife into the carcass. As soon as the cylindrical knife has been carried sufficiently into the carcass, and the anus has been drawn sufficiently deeply into the cylindrical knife because of the underpressure, the core which has likewise penetrated further into the carcass is withdrawn into the cylindrical knife. By moving a thickened outer end of the core to a position close to a constriction in the interior of the cylindrical knife the anus is thus secured in the cylindrical knife; at least if the thicker anus can no longer be moved between the constriction in the cylindrical knife and the inward moved thickened end of the core. In this position the rectum is held on the side of the anus in the cylindrical knife.

After separation the separating device is once again removed from the carcass in the direction in which it was introduced into the carcass such that the anus and a part of the rectum can be transferred on the backside (buttock side) of the carcass from the cylindrical knife into a holder. Later in the slaughtering process the anus with attached rectum is carried manually to the abdominal side of the carcass, following which the entrails are removed through the abdominal opening.

Detaching the anus and at least a part of the rectum from a carcass functions in practice according to the prior art. A number of aspects can however be improved; the problem, among others, that during or after release of the anus excreta from the anus regularly drops onto the carcass. Another drawback of the prior art is that, after the release of the anus and a part of the rectum from the carcass with the cylindrical knife, subsequent operations usually have to be performed manually.

From US 6,210,263 a field dressing apparatus is known for coring out or dissecting an anal sphincter and mobilizing a rectum of an animal, including a probe and at least one knife blade attached to a support member a fixed distance from the probe. A field dressing is practised for processing single animals, often on the location where the animal is slain, the field dressing apparatus has to be simple from construction and easy to carry. The field dressing apparatus is used for coring out the anal sphincter but the document is silent on the how to perform such coring other than by insertion and subsequent manual rotation. The field dressing apparatus as disclosed is not suited for mechanical/automatic processing of carcasses.

The present invention has for its object to provide an improved method and device for mechanical/automatic processing of carcasses of the type stated in the preamble with which the chance of contamination of a carcass of a slaughtered animal during separation of the anus is reduced and with which a subsequent mechanical/automatic processing of carcasses is made possible in efficient manner.

The invention provides for this purpose a method for separating the anus and the rectum from a carcass according claim 1. The method comprises of aligning a core of a separating device in a known manner with the anus of the carcass. The anus and a part of the rectum are subsequently separated from the carcass by electrically driven rotation of the cylindrical knife, wherein according to the present invention however the knife rotates alternately to the left and to the right during the separation. Owing to the alternate cutting to the left and right the rectum is not rotated (twisted). Twisting can occur when the cylindrical knife rotates in a single direction as in the prior art. Not twisting the rectum reduces the chance of the content of the rectum, i.e. excreta, being placed under pressure and thereby being forced outward. One of the advantages of the alternating electrically driven rotation of the cylindrical knife to the left and right is that no, or only limited, forces are exerted on the rectum, whereby the rectum will hardly twist at all. The volume of the rectum will thus not change, with the advantage that not twisting significantly reduces the chance of excreta coming out of the anus. Alternating electrically driven rotation to the left and right also reduces the chance of damage to the rectum, thereby also reducing the chance of the release of excreta. It is possible after one or more electrically driven rotations of the cylindrical knife to change the direction of electrically driven rotation, although it has also been found advantageous to rotate the knife alternately to the left and to the right through an angular electrically driven rotation between 10 and 350 degrees, preferably an angular electrically driven rotation between 30 and 150 degrees, and more particularly with an angular electrically driven rotation of about 90 degrees. The most suitable angular electrically driven rotation can be determined here subject to the situational conditions. Important factors here, among others, are the firmness of the tissue around the anus and whether or not a toothing is present on the cutting edge of the cylindrical knife.

The invention also provides a device for separating the anus and the rectum from a carcass, according claim 3. The drive of the knife comprising an electric motor is adapted here such that it drives the knife alternately to the left and to the right with an angular electrically driven rotation between 10 and 350 degrees, this being possible for instance with a crankshaft drive wherein the input drive shaft of the device has a smaller diameter than the driven shaft. For the advantages of applying such a device reference is made to the advantages already mentioned in the foregoing of the above described method according to the present invention. In addition, it is possible to convert an existing device for separating the anus from a carcass (vent cutter) with minimal effort to a vent cutter rotating alternately to the left and to the right.

The present invention further provides a combined method of separating the anus and a rectum as disclosed in combination with a method for severing a tissue part located between an opened pubic area of a carcass and an opening in the carcass arranged around the anus, wherein the opened part of the pubic area passes through the pubic bone of the carcass, characterized in that severing of the tissue part is carried out in a continuous movement with penetration into the carcass of a cylindrical knife with which the anus and at least a part of the rectum is separated from the carcass. Severing of the tissue part has the advantage of enabling the removal of the separated entrails (or a part thereof) directly to the abdominal side. Penetration of the cylindrical knife into the carcass in a continuous movement for the purpose of severing the tissue has the advantage that processing of the carcass can take place more quickly.

Instead of being carried out to the usual distance of 5 to 10 centimetres from the anus, the opening pretreatment can hereby take place to 1-5 centimetres from the anus, and in particular to 2-3 centimetres from the anus, for the purpose of enabling simple severing of the tissue with an additional knife. A minimum distance of for instance 2 to 3 centimetres is desirable for the purpose of enabling efficient verification of the alignment of the cylindrical knife on the basis of an underpressure. Because the tissue part around the anus is not fully severed, the cylindrical knife can connect gas-tightly onto the carcass. When severing is continued to a smaller distance from the anus, there is the chance that the underpressure cannot be developed since the severing then allows supply of air into the cylindrical knife.

In order to guarantee complete severing in a subsequent step of the tissue part located between an opened pubic area and the opening in the carcass arranged around the anus, it is desirable that the outer side of the jacket of the cylindrical knife is provided with a substantially annular undercut in which an outer end of the cutting edge of the additional knife is located. A cut made by the additional knife will hereby always connect onto the cut made by the cylindrical knife.

The present invention further provides a combined method of separating the anus and a rectum as disclosed in combination with a method for removing from a carcass an anus and at least a part of the rectum separated from the carcass, wherein the method comprises of engaging the anus and at least a part of the rectum separated from the carcass with a cylindrical knife of a separating device, and the anus and rectum engaged with the cylindrical knife are moved by the separating device to the abdominal side of the carcass. The separated anus and at least a part of the rectum are here preferably released from the cylindrical knife on the abdominal side of the carcass and are secured in a position located a distance from the carcass. The anus with at least a part of the rectum is thus displaced to the abdominal side in a shielded position (since they are accommodated in the cylindrical knife). The chance of contaminating the carcass by means of excreta leaving the anus is hereby considerably reduced compared to the prior art. This is because the unprotected displacement of the detached anus from the backside to the breast side results in an increased chance of contamination. A further advantage is that this method is very efficient; the anus engaged for the purpose of release does not have to be engaged again for a second time. This saves time and reduces the chance of errors.

In a particular embodiment variant of this method the rectum secured on the abdominal side and at a distance from the carcass is co-displaced with displacement of the carcass. The carcasses are usually moved along a transport path through a production location; the detached anus can thus be co-displaced until a processing station is reached where the entrails are separated from the carcass. The necessity of securing the anus at this position is also dispensed with.

The invention will be further elucidated on the basis of non-limitative exemplary embodiments shown in the following figures. Herein:
figure 1A shows a section of a part of a separating device according to a first embodiment of the present invention in a first position;
figure 1B shows a section of a part of a separating device according to a first embodiment of the present invention in a second position;
figure 1C shows a drive of a separating device comprising an electric motor according to a first embodiment of the present invention;
figure 2 is a perspective view of a device according to a second embodiment of the present invention;
figure 3A is a perspective view of a device according to a third embodiment of the present invention in a first position;
figure 3B is a perspective view of a device according to a third embodiment of the present invention in a second position;
figure 3C is a perspective view of a device according to a third embodiment of the present invention in a third position;
figure 3D is a perspective view of a device according to a third embodiment of the present invention in a fourth position;
figure 3E is a perspective view of a device according to a third embodiment of the present invention in a fifth position.

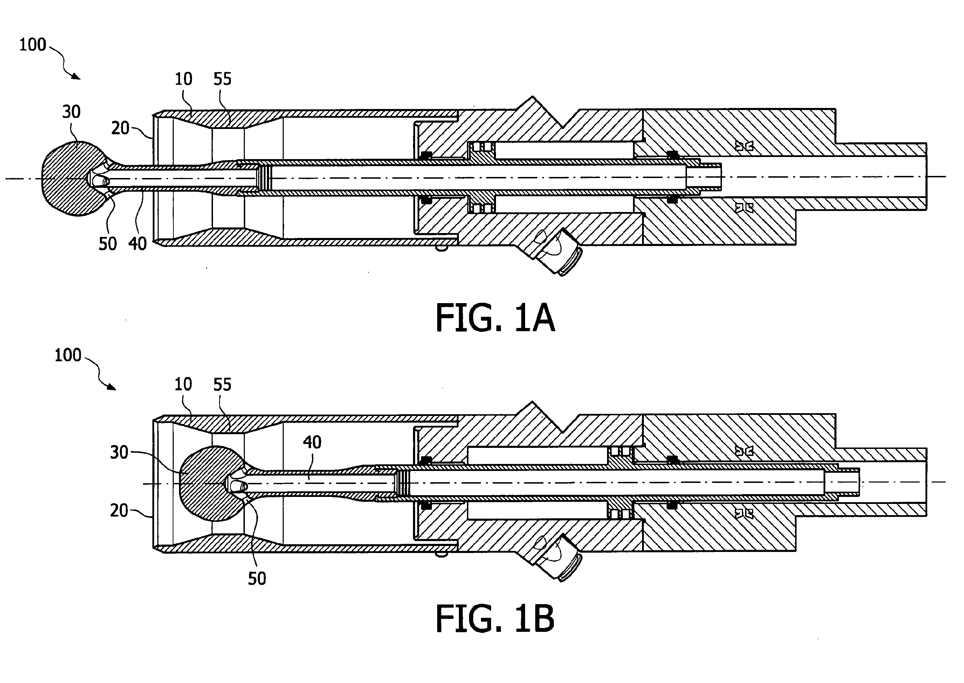

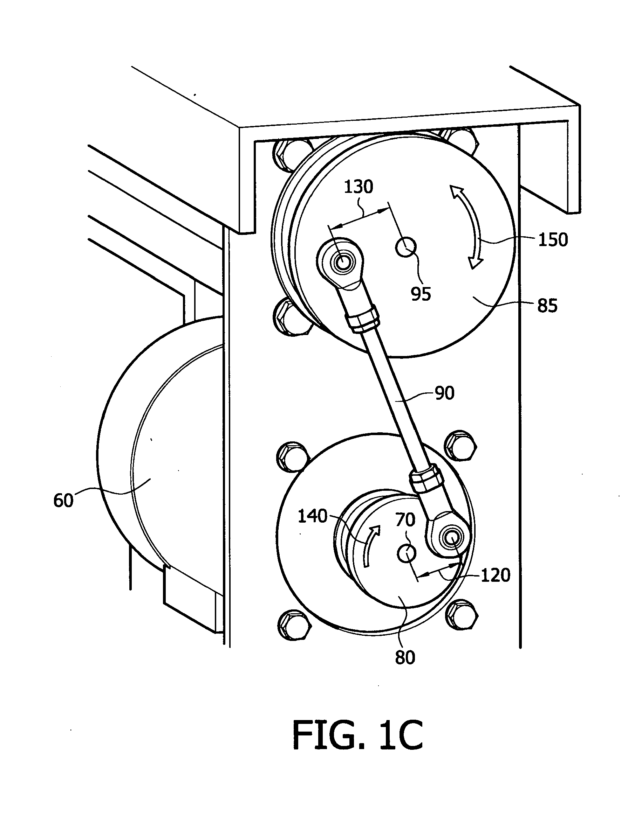

Figure 1A shows a section of a part 100 of the separating device according to a first embodiment of the present invention in a first position. The device comprises a cylindrical knife 10 with a circular cutting edge 20 in which is situated a core 30 placed axially relative to cylindrical knife 10. Core 30 is thus located on a axis 40. Core 30 can herein be displaced in the axial direction of axis 40. In the vicinity of a connection of core 30 to axis 40 openings of a vacuum device 50 are arranged for the purpose of verifying a correct alignment relative to the anus in simple manner by means of whether or not underpressure is present in cylindrical knife 10. Core 30 is situated in a position outside cylindrical knife 10. In this position the separating device 100 can be aligned relative to the anus, and core 30 can be introduced partially into the anus. As soon as cylindrical knife 10 has been partially introduced into the anus, core 30 can be retracted into the cylindrical knife. Introducing cylindrical knife 10 into the carcass herein takes place while knife 10 is rotated alternately to the left and right by means of for instance the drive comprising an electric motor which will be further elucidated in figure 1C.

Figure 1B shows device 100 of figure 1A, wherein core 30 has been retracted into cylindrical knife 10. The anus of the carcass is here secured between core 30 and a constriction 55 on the inner side of cylindrical knife 10. In this position the chance of excreta exiting from the rectum is extremely small, and device 100 can be taken with the anus and the rectum out of the carcass, and the anus is moreover shielded from the carcass by cylindrical knife 10.

Figure 1C shows an exemplary embodiment of a drive comprising an electric motor which can be applied on device 100 of figures 1A and 1B. The drive comprises a motor 60, for instance an electric motor, for driving a first wheel 80. First wheel 80 is connected via a crankshaft 90 to a second wheel 85 which is connected to a drive shaft 95 for driving the device 100. A crankshaft 90 is connected to first wheel 80 at a first radius 120 which is smaller than the second radius 130 at which the drive rod 90 is connected to second wheel 85. When first wheel 80 makes a first angular rotation 140, second wheel 85 hereby makes a second angular rotation 150 which is smaller than the first angular rotation 140. In the shown configuration the angular rotation of second wheel 85 will always be smaller than a full rotation, even when the first wheel 80 makes one or more complete rotations. In the shown configuration the angular rotation of second wheel 85 amounts to about 90 degrees. Depending on the chosen ratio between the first radius 120 and the second radius 130 the rotation can be adjusted to a value desired for a specific tissue.

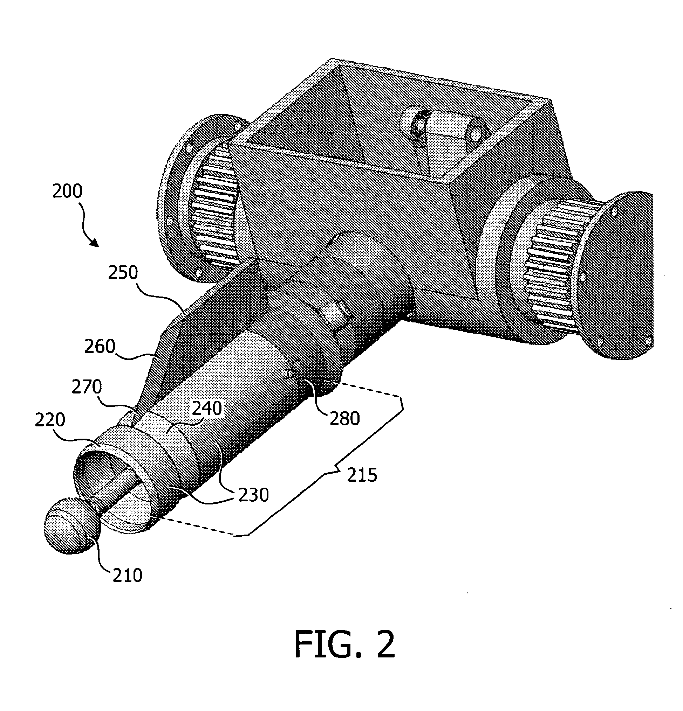

Figure 2 shows a device 200 according to a second embodiment of the present invention. Shown once again is a core 210 which is centered in a cylindrical knife 215 with a cutting edge 220. The device can herein be driven with the drive (not shown) of figure 1C. Arranged adjoining the jacket 230 of cylindrical knife 215 is an additional knife 250 which serves to sever a tissue part between an opened part of a carcass to be processed by the device and a part comprising the anus and the rectum separated from this carcass. A cutting-edge 260 of the additional knife 250 extends in radial direction relative to the cylinder jacket 230 of the cylindrical knife. The additional knife 250 is connected to a non-rotating fixed part 280 of device 200, whereby it does not co-rotate with cylindrical knife 230. In figure 2 there is arranged in cylinder jacket 230 of cylindrical knife 215 a substantially annular undercut 240 in which an outer end 270 of cutting edge 260 of additional knife 250 is received. This prevents tissue not been cut because it is carried between the flat knife 250 and cylindrical knife 215. The additional knife 250 provides the advantage that no manual processing or separate automated processing need take place, and makes it possible for the separated anus and rectum to be carried away to the abdominal side of the carcass, with the advantage that there is little risk of excreta falling onto the carcass.

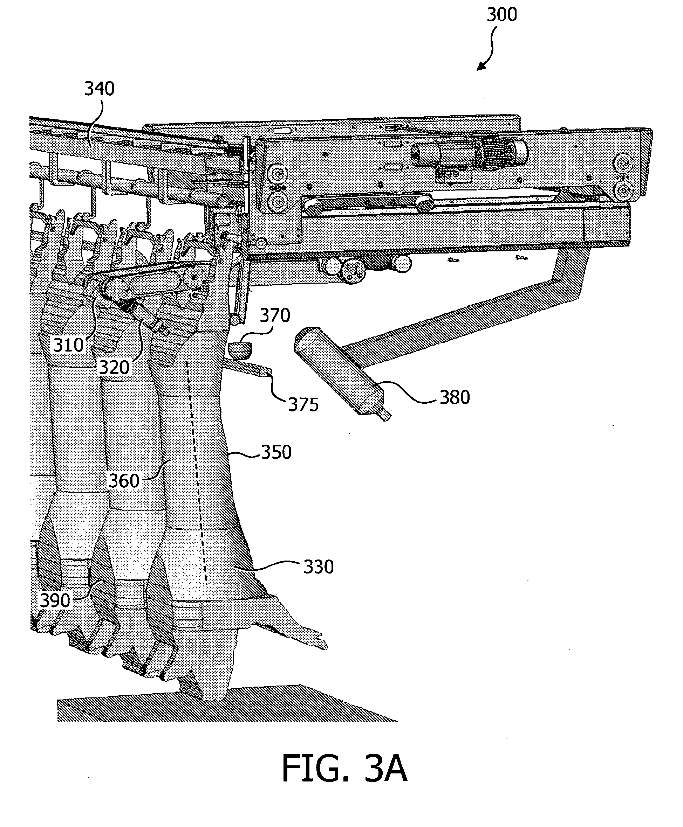

Figure 3A shows a device 300 according to a third embodiment of the present invention in a first position. A separating device (for instance the device 200 of figure 2) with an additional knife for severing the tissue between an opened pubic bone and a detached anus, is herein positioned by means of an arm 310 in a position at the level of the anus of carcass 330. The carcass is carried along device 300 by a transporting device 340 which does not per se form part of the present invention.

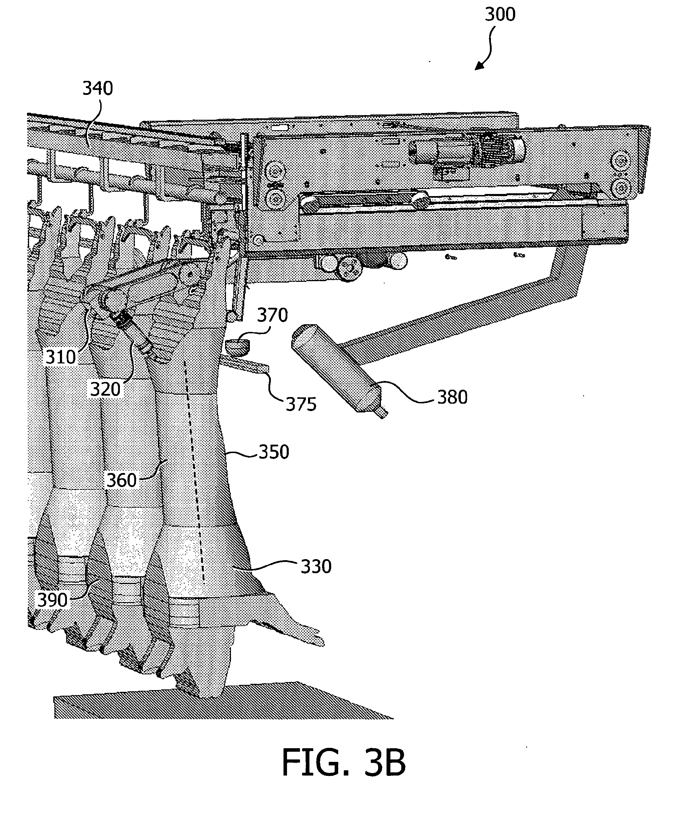

Figure 3B shows device 300 in a second position subsequent to the position as shown in figure 3A, in which device 300 is carried partially into carcass 330 on the backside 360. Device 300 is rotated alternately to the left and right around the anus and the rectum. The tissue between the cut cleaving the pubic bone and the separation of the anus and the rectum is thus severed.

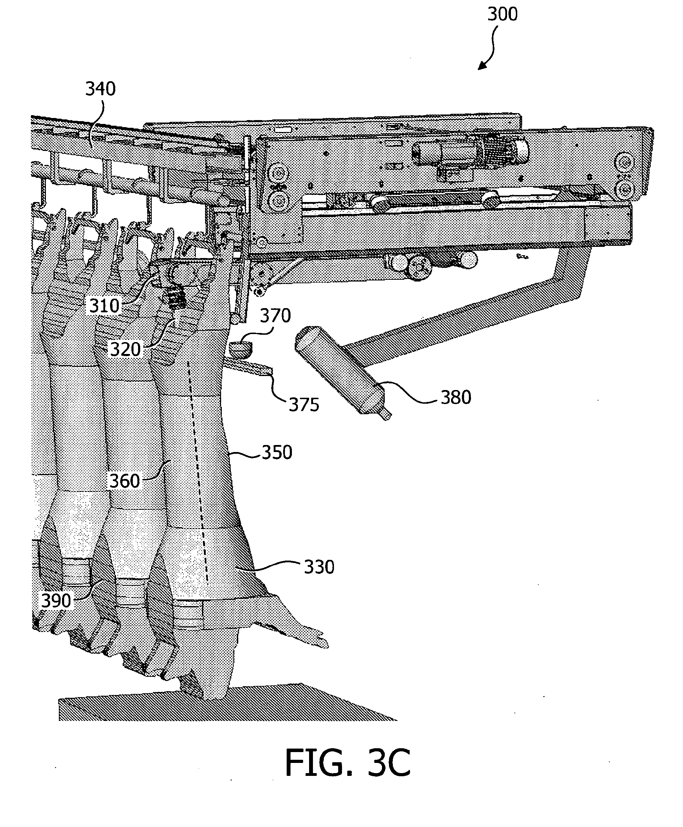

Figure 3C shows device 300 in a third position subsequent to the position of figure 3B, wherein after separation of the anus and the rectum severing of the remaining tissue between the opening of the pubic bone and the anus is carried out on the abdominal side 350 of carcass 330. The anus and the rectum are here secured by separating device 300.

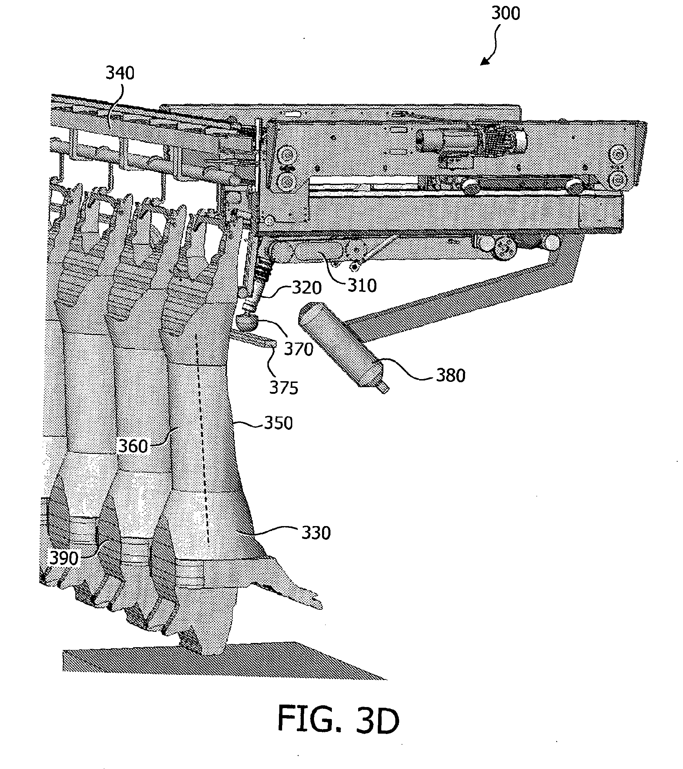

Figure 3D shows device 300 of figures 3A-3C in a fourth position subsequent to the position of figure 3C, in which the separated anus and rectum (not shown) are placed in a holder 370 which is co-displaced with carcass 330 over a rail 375.

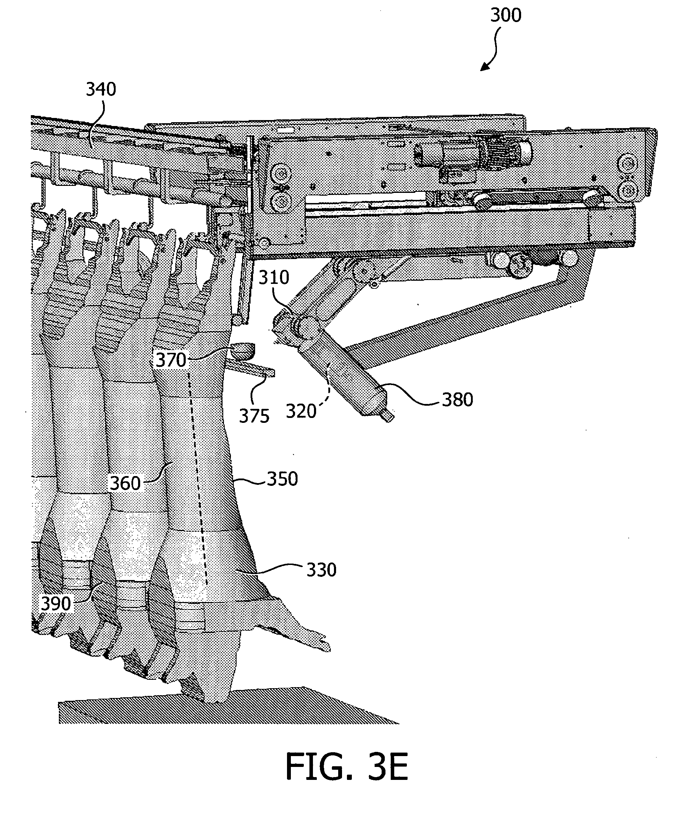

Figure 3E shows device 300 of figures 3A-3D in a fifth position subsequent to the position as illustrated in figure 3D, wherein a part of separating device 300 is placed in a cleaning device so as to be thus cleaned before once again running through the first to the fourth positions for a subsequent carcass 390 for processing.

## Claims

1. Method for separating the anus and the rectum from a carcass (330, 390), comprising of:
- aligning a core (30, 210) of a separating device comprising a cylindrical knife (10, 215) with the anus of the slaughtered animal;
- introducing the core (30, 210) of the separating device at least partially into the anus;
- separating the anus and the rectum from the carcass (330, 390) using the cylindrical knife (10, 215);
**characterized in that** the knife (10, 215) rotates electrically driven alternately to the left and to the right during the separation.

2. Method as claimed in claim 1, **characterized in that** the electrically driven rotation of the knife (10, 215) alternately to the left and to the right takes place through an electrically driven angular rotation between 10 and 350 degrees.

3. Device (100, 200, 300) for separating the anus and the rectum from a carcass (330, 390) according claim 1, comprising:
- a cylindrical knife (10, 215) rotatable by means of a drive; and
- a core (30, 210) centered relative to the cylindrical knife (10, 215),
**characterized in that** the drive comprises an electric motor (60) which is adapted to drive at least the cylindrical knife (10, 215) alternately to the left and to the right.

4. Device (100, 200, 300) as claimed in claim 3, **characterized in that** the drive comprising an electric motor (60) drives the knife (10, 215) alternately to the left and to the right with an electrically driven angular rotation between 10 and 350 degrees.

5. Combined method for processing a carcass (330, 390), comprising a method as claimed in claim 1 or 2, and at least one of the two additional methods:,
A) method for severing a tissue part located between an opened pubic area of a carcass (330, 390) and an opening in the carcass (330, 390) arranged around the anus, wherein the opened part of the pubic area passes through the pubic bone of the carcass (330, 390), wherein the severing of the tissue part is carried out in a continuous movement with the action of penetrating into the carcass (330, 390) of a knife (250) with which the anus and at least a part of the rectum is separated from the carcass (330, 390), and
B) method for removing from a carcass (330, 390) an anus and at least a part of the rectum separated from the carcass (330, 390), comprising of engaging the anus and at least a part of the rectum separated from the carcass (330, 390) with a cylindrical knife (10, 215) of a separating device (100, 200, 300), wherein the anus and rectum engaged with the cylindrical knife (10, 215) are moved by the separating device (100, 200, 300) to the abdominal side (350) of the carcass (330, 390).

6. Method as claimed in claim 5, **characterised in that** prior to the severing of the tissue part according method A) the pubic area is opened to a distance of 1 to 5 centimetres from the anus.

7. Method as claimed in claim 6, **characterised in that** prior to the severing of the tissue part the pubic area is opened to a distance of 2 to 3 centimetres from the anus.

8. Method as claimed in any of the claims 5-7, **characterized in that** the separated anus and at least a part of the rectum are released according method B) from the cylindrical knife (10, 215) on the abdominal side (350) of the carcass (330, 390) and are secured in a position located a distance from the carcass (330, 390).

9. Method as claimed in claim 8, **characterized in that** the rectum secured on the abdominal side (350) and at a distance from the carcass (330, 390) is co-displaced with displacement of the carcass (330, 390).

10. Combined device for processing a carcass (330, 390), comprising a device (100, 200, 300) as claimed in claim 3 or 4, and at least one of the two additional devices:
X) device for severing a tissue part located between an opened pubic area of a carcass (330, 390) and an opening in the carcass (330, 390) arranged around the anus, wherein the opened part of the pubic area passes through the pubic bone of the carcass (330, 390), comprising a separating device provided with a substantially cylindrical knife (10, 215) rotatable by a drive for separating the anus and at least a part of the rectum from the carcass (330, 390), wherein an additional knife (250) is coupled to the separating device such that the projection of a cutting edge (220) of the additional knife (250) onto a plane lying substantially perpendicularly of the centre line of the cylindrical knife (10, 215) connects the cut around the anus defined by the cylindrical knife (10, 215) to the opened pubic area, and
Y) device for taking out of a carcass (330, 390) an anus and at least a part of the rectum separated from the carcass (330, 390), comprising a separating device provided with a cylindrical knife (10, 215) for separating the anus and at least a part of the rectum from the carcass (330, 390), which separating device is adapted to secure the anus and the rectum in the cylindrical knife (10, 215), wherein the cylindrical knife (10, 215) is displaceable to the abdominal side (350) of the carcass (330, 390).

11. Device as claimed in claim 10, **characterized in that** the outer side of the jacket (230) of the substantially cylindrical knife (10, 215) of device X) is provided with a substantially annular undercut (240) in which an outer end of the cutting edge of the additional knife (250) is located.

12. Device as claimed in claim 10 or 11, **characterized in that** the cylindrical knife (10, 215) of device Y) is carried by a knife holder (370) displaceable between the legs of the carcass (330, 390).

13. Device as claimed in claim 12, **characterized in that** the device Y) comprises securing means located on the abdominal side (350) of the carcass (330, 390) for holding the anus and rectum released from the cylindrical knife (10, 215).

14. Device as claimed in claim 13, **characterized in that** the securing means of device Y) are displaceable parallel to a transport path for the carcasses (330, 390).

## Patentansprüche

1. Verfahren zum Abtrennen des Anus und des Rektums von einem Schlachtkörper (330, 390), das umfasst:
- in eine Linie Bringen eines Kerns (30, 210) von einer Trennvorrichtung, die ein zylinderförmiges Messer (10, 215) umfasst, mit dem Anus des geschlachteten Tieres;
- zumindest teilweises Einführen des Kerns (30, 210) von der Trennvorrichtung in den Anus;
- Trennen des Anus und des Rektums von dem Schlachtkörper (330, 390) unter Einsatz des zylinderförmigen Messers (10, 215);
**dadurch gekennzeichnet, dass** das Messer (10, 215) während des Trennvorgangs elektrisch angetrieben wird und abwechselnd nach links und nach rechts dreht.

2. Verfahren nach Anspruch 1, **dadurch gekennzeichnet, dass** die elektrisch angetriebene Drehbewegung des Messers (10, 215) abwechselnd nach links und nach rechts mit einer elektrisch angetriebenen Winkeldrehung zwischen 10 und 350 Grad erfolgt.

3. Vorrichtung (100, 200, 300) zum Abtrennen des Anus und des Rektums von einem Schlachtkörper (330, 390) nach Anspruch 1, die umfasst:
- ein zylinderförmiges Messer (10, 215), das mittels eines Antriebs drehbar ist; und
- ein Kern (30, 210), der relativ zum zylinderförmigen Messer (10, 215) zentriert ist,
**dadurch gekennzeichnet, dass** der Antrieb einen elektrischen Motor (60) umfasst, der ausgelegt ist, zumindest das zylinderförmige Messer (10, 215) abwechselnd nach links und nach rechts anzutreiben.

4. Vorrichtung (100, 200, 300) nach Anspruch 3, **dadurch gekennzeichnet, dass** der Antrieb einen elektrischen Motor (60) umfasst, der das Messer (10, 215) abwechselnd nach links und nach rechts mit einer elektrisch angetriebenen Winkeldrehung zwischen 10 und 350 Grad antreibt.

5. Kombiniertes Verfahren für die Verarbeitung eines Schlachtkörpers (330, 390), das ein Verfahren nach Anspruch 1 oder 2 umfasst, und mindestens eines der beiden zusätzlichen Verfahren:
A) Verfahren zum Abtrennen eines Gewebeteils, das sich zwischen einer geöffneten Pubeszone eines Schlachtkörpers (330, 390) und einer Öffnung in dem Schlachtkörper (330, 390), die um den Anus angeordnet ist, befindet, worin der geöffnete Teil der Pubeszone durch den Pubesknochen des Schlachtkörpers (330, 390) hindurchreicht, worin die Abtrennung des Gewebeteils in einer kontinuierlichen Bewegung ausgeführt wird mit dem Eindringen eines Messers (250) in den Schlachtkörper (330, 390), mit dem der Anus und mindestens ein Teil des Rektums vom Schlachtkörper (330, 390) abgetrennt sind, und
B) Verfahren zum Abtrennen bei einem Schlachtkörper (330, 390) eines Anus und mindestens eines Teils des von dem Schlachtkörper (330, 390) abgetrennten Rektums, welches Verfahren das Greifen des Anus und mindestens eines Teils des von dem Schlachtkörper (330, 390) abgetrennten Rektums mit einem zylinderförmigen Messer (10, 215) einer Trennvorrichtung (100, 200, 300) umfasst, wobei der mit dem zylinderförmigen Messer (10, 215) festgehaltene Anus und das Rektum von der Trennvorrichtung (100, 200, 300) zur Bauchseite (350) des Schlachtkörpers (330, 390) bewegt werden.

6. Verfahren nach Anspruch 5, **dadurch gekennzeichnet, dass** vor dem Abtrennen des Gewebeteils nach Verfahren A) die Pubeszone auf einen Abstand von 1 bis 5 Zentimeter vom Anus geöffnet wird.

7. Verfahren nach Anspruch 6, **dadurch gekennzeichnet, dass** vor dem Abtrennen des Gewebeteils die Pubeszone auf einen Abstand von 2 bis 3 Zentimeter vom Anus geöffnet wird.

8. Verfahren nach einem der Ansprüche 5-7, **dadurch gekennzeichnet, dass** der getrennte Anus und mindestens ein Teil des Rektums nach Verfahren B) von dem zylinderförmigen Messer (10, 215) an der Bauchseite (350) des Schlachtkörpers (330, 390) gelöst werden und in einer in einem Abstand vom Schlachtkörper (330, 390) gelegenen Position gesichert werden.

9. Verfahren nach Anspruch 8, **dadurch gekennzeichnet, dass** das auf der Bauchseite (350) und in einem Abstand vom Schlachtkörper (330, 390) gesicherte Rektum gemeinsam mit der Verschiebung des Schlachtkörpers (330, 390) verlagert wird.

10. Kombinierte Vorrichtung für die Verarbeitung eines Schlachtkörpers (330, 390), die eine Vorrichtung (100, 200, 300) nach Anspruch 3 oder 4 und mindestens eine der beiden zusätzlichen Vorrichtungen umfasst:
X) Vorrichtung zum Abtrennen eines Gewebeteils, das sich zwischen einer geöffneten Pubeszone eines Schlachtkörpers (330, 390) und einer Öffnung in dem Schlachtkörper (330, 390), die um den Anus angeordnet ist, befindet, worin der geöffnete Teil der Pubeszone durch den Pubesknochen des Schlachtkörpers (330, 390) hindurchreicht, welche Vorrichtung eine Trennvorrichtung umfasst, die mit einem im Wesentlichen zylinderförmigen Messer (10, 215) versehen ist, das mit Hilfe eines Antriebs drehbar zum Abtrennen des Anus und mindestens eines Teils des Rektums von einem Schlachtkörper (330, 390) versehen ist, worin ein zusätzliches Messer (250) mit der Trennvorrichtung verbunden ist, auf eine Weise, dass die Projektion einer Schneidkante (220) des zusätzlichen Messers (250) auf eine Ebene, die im Wesentlichen senkrecht zur Mittellinie des zylinderförmigen Messers (10, 215) liegt, den Schnitt um den Anus, der von dem zylinderförmigen Messer (10, 215) zu der geöffneten Pubeszone festgelegt ist, verbindet und
Y) Vorrichtung zum Herausnehmen eines Anus und mindestens eines Teils des von dem Schlachtkörper (330, 390) getrennten Rektums aus einem Schlachtkörper (330, 390), die eine Trennvorrichtung umfasst, die mit einem zylinderförmigen Messer (10, 215) zum Abtrennen des Anus und mindestens eines Teils des Rektums von dem Schlachtkörper (330, 390) versehen ist, welche Trennvorrichtung ausgelegt ist, den Anus und das Rektum in dem zylinderförmigen Messer (10, 215) zu fixieren, worin das zylinderförmige Messer (10, 215) zur Bauchseite (350) des Schlachtkörpers (330, 390) verschoben werden kann.

11. Vorrichtung nach Anspruch 10, **dadurch gekennzeichnet, dass** die Außenseite des Mantels (230) des im Wesentlichen zylinderförmigen Messers (10, 215) von Vorrichtung X) mit einem im Wesentlichen ringförmigen Freistich (240) versehen ist, in dem sich ein äußeres Ende der Schneidkante des zusätzlichen Messers (250) befindet.

12. Vorrichtung nach Anspruch 10 oder 11, **dadurch gekennzeichnet, dass** das zylinderförmige Messer (10, 215) von Vorrichtung Y) von einem Messerhalter (370) getragen wird, der zwischen den Beinen des Schlachtkörpers (330, 390) verschoben werden kann.

13. Vorrichtung nach Anspruch 12, **dadurch gekennzeichnet, dass** die Vorrichtung Y) Befestigungsmittel umfasst, die sich an der Bauchseite (350) des Schlachtkörpers (330, 390) zum Halten des Anus und des Rektums, die von dem zylinderförmigen Messer (10, 215) freigegeben werden, befinden.

14. Vorrichtung nach Anspruch 13, **dadurch gekennzeichnet, dass** die Befestigungsmittel von Vorrichtung Y) parallel zu einem Transportpfad für die Schlachtkörper (330, 390) verschoben werden können.

## Revendications

1. Procédé pour séparer l'anus et le rectum d'une carcasse (330, 390), consistant :
- à aligner un noyau (30, 210) d'un dispositif séparateur comprenant un couteau cylindrique (10, 215) sur l'anus de l'animal abattu ;
- à introduire le noyau (30, 210) du dispositif séparateur au moins partiellement dans l'anus ;
- à séparer l'anus et le rectum de la carcasse (330, 390) en utilisant le couteau cylindrique (10, 215),
**caractérisé en ce que** le couteau (10, 215) tourne, par entraînement électrique, alternativement vers la gauche et vers la droite pendant la séparation.

2. Procédé selon la revendication 1, **caractérisé en ce que** la rotation par entraînement électrique du couteau (10, 215) alternativement vers la gauche et vers la droite a lieu au moyen d'une rotation angulaire par entraînement électrique entre 10 et 350 degrés.

3. Dispositif (100, 200, 300) pour séparer l'anus et le rectum d'une carcasse (330, 390) selon la revendication 1, comprenant :
- un couteau cylindrique (10, 215) rotatif au moyen d'un entraînement, et
- un noyau (30, 210) centré par rapport au couteau cylindrique (10, 215),
**caractérisé en ce que** l'entraînement comprend un moteur électrique (60) qui est adapté pour entraîner au moins le couteau cylindrique (10, 215) alternativement vers la gauche et vers la droite.

4. Dispositif (100, 200, 300) selon la revendication 3, **caractérisé en ce que** l'entraînement comprenant un moteur électrique (60) entraîne le couteau (10, 215) alternativement vers la gauche et vers la droite selon une rotation angulaire par entraînement électrique entre 10 et 350 degrés.

5. Procédé combiné pour traiter une carcasse (330, 390), comprenant un procédé selon la revendication 1 ou 2 et au moins l'un des deux procédés additionnels :
A) procédé pour séparer un morceau de tissu situé entre une région pubienne ouverte d'une carcasse (330, 390) et une ouverture dans la carcasse (330, 390) agencée autour de l'anus, étant entendu que la partie ouverte de la région pubienne passe par le pubis de la carcasse (330, 390), étant entendu que la séparation du morceau de tissu est réalisée en un mouvement continu comprenant l'action de faire pénétrer dans la carcasse (330, 390) un couteau (250) avec lequel l'anus et au moins une partie du rectum sont séparés de la carcasse (330, 390), et
B) procédé pour retirer d'une carcasse (330, 390) un anus et au moins une partie du rectum séparés de la carcasse (330, 390), consistant à saisir l'anus et au moins une partie du rectum séparés de la carcasse (330, 390) avec un couteau cylindrique (10, 215) d'un dispositif séparateur (100, 200, 300), étant entendu que l'anus et le rectum saisis avec le couteau cylindrique (10, 215) sont déplacés par le dispositif séparateur (100, 200, 300) jusqu'au côté abdominal (350) de la carcasse (330, 390).

6. Procédé selon la revendication 5, **caractérisé en ce que**, préalablement à la séparation du morceau de tissu selon le procédé A), la région pubienne est ouverte jusqu'à une distance de 1 à 5 centimètres de l'anus.

7. Procédé selon la revendication 6, **caractérisé en ce que**, préalablement à la séparation du morceau de tissu, la région pubienne est ouverte jusqu'à une distance de 2 à 3 centimètres de l'anus.

8. Procédé selon l'une quelconque des revendications 5-7, **caractérisé en ce que** l'anus séparé et au moins une partie du rectum sont détachés selon le procédé B) du couteau cylindrique (10, 215) du côté abdominal (350) de la carcasse (330, 390) et sont fixés dans une position située à une certaine distance de la carcasse (330, 390).

9. Procédé selon la revendication 8, **caractérisé en ce que** le rectum fixé du côté abdominal (350) et à une certaine distance de la carcasse (330, 390) est déplacé conjointement avec le déplacement de la carcasse (330, 390).

10. Dispositif combiné pour traiter une carcasse (330, 390), comprenant un dispositif (100, 200, 300) selon la revendication 3 ou 4, et au moins l'un des deux dispositifs additionnels :
X) dispositif pour séparer un morceau de tissu situé entre une région pubienne ouverte d'une carcasse (330, 390) et une ouverture dans la carcasse (330, 390) agencée autour de l'anus, étant entendu que la partie ouverte de la région pubienne passe par le pubis de la carcasse (330, 390), comprenant un dispositif séparateur pourvu d'un couteau sensiblement cylindrique (10, 215) rotatif au moyen d'un entraînement pour séparer l'anus et au moins une partie du rectum de la carcasse (330, 390), étant entendu qu'un couteau additionnel (250) est couplé au dispositif séparateur de telle sorte que la projection d'un bord coupant (220) du couteau additionnel (250) sur un plan sensiblement perpendiculaire à l'axe central du couteau cylindrique (10, 215) relie l'entaille autour de l'anus définie par le couteau cylindrique (10, 215) à la région pubienne ouverte, et
Y) dispositif pour retirer d'une carcasse (330, 390) un anus et au moins une partie du rectum séparés de la carcasse (330, 390), comprenant un dispositif séparateur pourvu d'un couteau cylindrique (10, 215) pour séparer l'anus et au moins une partie du rectum de la carcasse (330, 390), lequel dispositif séparateur est adapté pour fixer l'anus et le rectum dans le couteau cylindrique (1, 215), étant entendu que le couteau cylindrique (10, 215) est déplaçable jusqu'au côté abdominal (350) de la carcasse (330, 390).

11. Dispositif selon la revendication 10, **caractérisé en ce que** le côté extérieur de l'enveloppe (230) du couteau sensiblement cylindrique (10, 215) du dispositif X) est pourvue d'un dégagement sensiblement annulaire (240) dans lequel une extrémité extérieure du bord coupant du couteau additionnel (250) est située.

12. Dispositif selon la revendication 10 ou 11, **caractérisé en ce que** le couteau cylindrique (10, 215) du dispositif Y) est porté par un porte-couteau (370) déplaçable entre les pattes de la carcasse (330, 390).

13. Dispositif selon la revendication 12, **caractérisé en ce que** le dispositif Y) comprend des moyens de fixation situés du côté abdominal (350) de la carcasse (330, 390) pour tenir l'anus et le rectum détachés du couteau cylindrique (10, 215).

14. Dispositif selon la revendication 13, **caractérisé en ce que** les moyens de fixation du dispositif Y) sont déplaçables parallèlement à un trajet de transport des carcasses (330, 390).
